# EUROPEAN PATENT APPLICATION

(11) **EP 4 544 915 A1**
(43) Date of publication of application: **30.04.2025**
(21) Application number: 23827048.2
(22) Date of filing: 13.06.2023
(51) Int. Cl.: A23D 9/00, A23D 9/007, A23G 1/00, A23G 1/38

(54) **OIL AND FAT COMPOSITION**

(30) Priority: 24.06.2022 JP 2022101803
(71) Applicant: Fuji Oil Holdings Inc., Izumisano-shi, Osaka 598-8540 (JP)
(72) Inventor: MIZUSHIMA, Shigeki, Tsukubamirai-shi, Ibaraki 300-2436 (JP); UEYAMA, Tomoki, Izumisano-shi, Osaka 598-8540 (JP); KANO, Hiroshi, Izumisano-shi, Osaka 598-8540 (JP); INOUE, Ryota, Izumisano-shi, Osaka 598-8540 (JP)
(74) Representative: Becker, Eberhard
(86) International application number: PCT/JP2023/021839
(87) International publication number: WO 2023/248862

(57) **Abstract**

The present invention addresses the problem of: sufficiently reducing the oily sensation of oil and fat processed foods such as chocolate; and providing an oil and fat composition suitable therefor. By using an oil and fat composition that contains a protein material having a viscosity of at most 10,000 mPa·s and a 0.22 M TCA solubilization rate of 30-95% when measured at 25 °C after heating an aqueous solution with a crude protein content of 20 mass% at 80 °C for 30 minutes, the oily sensation of oil and fat processed foods such as chocolate can be sufficiently reduced.

## Description

### Technical Field

The present invention relates to an oil and/or fat composition.

### Background Art

General edible oils and/or fats have an oily feeling (oiliness) unique to the edible oils and/or fats, and may have an unfavorable oil taste to some extent.

Chocolates, which are representative oil and/or fat processed foods, are typically produced from cocoa mass, cocoa butter, sugar, milk powder, and the like. On the other hand, for the purpose of improving the physical properties of chocolate and saving raw material costs, part or all of cocoa butter is generally replaced with hard butter or other edible oils and/or fats. Among them, there are chocolates that hardly use a cacao component (in the following description, chocolates are referred to including so-called quasi-chocolates and the like, regardless of the laws and regulations and standards of each country). In recent years, chocolate confectionery is not only eaten alone, but there are also many products such as those combined with other foods, for example, baked confectionery, bubble-containing chocolate, and low-melting chocolate limited to winter.

In order to produce such a variety of chocolate confectionery, there is an increasing opportunity to improve the physical properties of chocolate using a variety of edible oils and/or fats including hard butter, and particularly when the oil content is increased, the oily feeling (oiliness) tends to be enhanced. In addition, even with the same oil content, milk chocolate containing a large amount of milk components and white chocolate containing no cocoa mass or cocoa tend to have a stronger oily feeling than bitter chocolate (sweet chocolate, black chocolate).

Various attempts have been made on a method for reducing the oily feeling of oil and/or fat processed food. For example, there has been devised a method for obtaining a food using oil and/or fat for confectionery such as chocolate and/or cream in which the oily feeling is reduced by edible oil and/or fat containing an organic acid obtained by desolventizing an organic acid solution such as ascorbic acid under reduced pressure while stirring (Patent Document 1). In addition, a method has also been devised in which an intense sweetener is added in the form of an aqueous solution, the intense sweetener is contained in edible oil and/or fat, and the oily feeling of chocolate or the like is reduced by using the intense sweetener (Patent Document 2).

### Citation List

### Patent Documents

Patent Document 1: JP 2003-235447 A
Patent Document 2: JP 2005-204511 A

### Summary of Invention

### Technical Problem

In Patent Document 1, the content of the organic acid in the oil and/or fat is usually 60 ppm or less, and in Patent Document 2, the content of the intense sweetener in the oil and/or fat is usually 120 ppm or less, so that it is difficult to contain any of the organic acid and the intense sweetener in large amounts. Therefore, depending on the application, a sufficient oily feeling reducing effect may not be obtained.

An object of the present invention is to provide an oil and/or fat composition which sufficiently reduces an oily feeling of an oil and/or fat processed food such as chocolate and is suitable for the oil and/or fat processed food.

### Solution to Problem

In order to solve the above problems, the present inventors have extensively conducted studies, and resultantly found that when an oil and/or fat composition using a protein material having a specific property is prepared, an oily feeling of an oil and/or fat processed food such as chocolate can be greatly reduced, leading to completion of the present invention.

That is, the present invention encompasses the following inventions.
(1) An oil and/or fat composition containing a protein material which has properties in which after an aqueous solution having a crude protein content of 20 mass% is heated at 80°C for 30 minutes, the aqueous solution has a viscosity of 10000 mPa·s or less measured at 25°C, and a 0.22 M TCA solubilization rate is from 30% to 95%.
(2) The oil and/or fat composition according to (1), wherein the protein material has an NSI of 80 or more.
(3) The oil and/or fat composition according to (1), wherein a water activity is 0.65 or less.
(4) An oil and/or fat processed food including the oil and/or fat composition described in (1).
(5) The oil and/or fat processed food according to (4), wherein the oil and/or fat processed food is a chocolate.
(6) A method for producing the oil and/or fat composition described in (1), the method including dispersing an aqueous solution of a protein material in an oil and/or fat raw material.
(7) The oil and/or fat composition according to (1), wherein the oil and/or fat composition is an oily feeling reducing agent.
(8) A method for reducing an oily feeling of an oil and/or fat processed food, wherein the oil and/or fat processed food includes the oil and/or fat composition described in (1).

### Advantageous Effects of Invention

According to the present invention, an oil and/or fat composition suitable for producing an oil and/or fat processed food having a reduced oily feeling can be obtained by a simple method.

According to a specific aspect of the present invention, by using an oil and/or fat composition having a sufficiently reduced water activity, it is possible to produce an oil and/or fat processed food which has a reduced risk of microorganism growth and can be stored for a long period of time.

### Description of Embodiments

The present invention will be described in detail below.

### (Oil and/or fat)

The raw material used in the oil and/or fat composition of the present invention is oil and/or fat generally used for food applications, and specific examples thereof include various animal and plant oils and/or fats, such as high-erucic rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid-bound triglyceride (MCT), shea butter, sal fat, cocoa butter substitute fats, babassu oil, milk fat, beef tallow, lard, fish oil, and whale oil. In the present invention, one or more oils and/or fats selected from these oils and/or fats can be used after being subjected to one or more processes selected from fractionation, hydrogenation, and interesterification.

In the oil and/or fat composition of the present invention, other oil-soluble components can be dissolved as long as the effect of the present invention is not hindered. Specific examples of the oil-soluble component include an oil-soluble emulsifier, a pigment, and a fragrance. In particular, in the oil and/or fat composition of the present invention, since the composition has a so-called water-in-oil type emulsified structure in which the aqueous phase is finely dispersed in the oil phase, it is preferable to use an oil-soluble emulsifier having a function of stabilizing the emulsified structure. In the present invention, the oil-soluble emulsifier is an emulsifier that has an HLB of 7 or less and is dissolved in oil and/or fat. Specifically, one or more selected from polyglycerin ester, sugar ester, sorbitan ester, and monoglycerin fatty acid ester are preferable, polyglycerin ester, sugar ester, and distilled monoglyceride are more preferable, polyglycerin ester is particularly preferable, and polyglycerin condensed ricinoleic acid ester is most preferable among them. The polyglycerin condensed ricinoleic acid ester may be abbreviated as PGPR.

### (Protein material)

A protein material used in the present invention needs to have a low viscosity after heating. Specifically, the viscosity after heating can be measured as follows. An aqueous solution of the present protein material is prepared so as to have a crude protein content of 20 mass%, and is heated at 80°C for 30 minutes, and then the viscosity of the aqueous solution is measured at 25°C. The viscosity after heating is 10000 mPa·s or less, preferably 5000 mPa·s or less, 1000 mPa·s or less, and 500 mPa·s or less, and more preferably 200 mPa·s or less, and 100 mPa·s or less. When the viscosity of the present protein material after heating exceeds 10000 mPa·s, emulsifiability may deteriorate and workability may deteriorate when an oil and/or fat composition is prepared using the protein material.

The present protein material requires a molecular weight of a certain size. The molecular weight is defined by a TCA solubilization rate. In the present invention, the TCA solubilization rate is defined by the ratio of the content of crude protein dissolved in 0.22M TCA to the total crude protein content. The TCA solubilization rate is from 30 to 95%, preferably from 35 to 90%, more preferably from 40 to 85% and from 50 to 80%. When the TCA solubilization rate is too low, the viscosity after heating tends to increase, which is not suitable, and transmittance decreases. On the other hand, when the TCA solubilization rate is too high, the amount of the protein contributing to emulsifiability decreases, and it is necessary to add a large amount of the present protein material, so that a degree of freedom of formulation decreases, which is not preferable.

The present protein material preferably has an NSI (nitrogen solubility index) used as an index of protein solubility of 80 or more. More preferably, the protein material having an NSI of 85 or more, 90 or more, 95 or more, or 97 or more can be used. A high NSI of the present protein material indicates high dispersibility in water and can contribute to dispersion stability of the oil and/or fat composition of the protein material. The protein material with a too low NSI would tend to cause precipitation, which is not preferred. The crude protein content in the present protein material is also preferably 30 mass% or more, more preferably 50 mass% or more, and most preferably 70 mass% or more. A protein material having a higher crude protein content can exhibit its function in a smaller amount.

Such a protein material has not been generally commercially available heretofore, but can be obtained by a modification, a molecular weight adjustment treatment, and the like described later, and in recent years, the protein material can also be obtained as a commercially available product "MIRA-MAP 2.0" available from Fuji Oil Co., Ltd. Commercially available soybean protein materials such as FUJIPRO R, FUJIPRO 748, FUJIPRO CL, and HINUTE AM (all available from Fuji Oil Co., Ltd.) do not fall under this requirement.

Although the origin of the protein material to be prepared is not particularly limited, plant-derived, animal-derived, or microorganism-derived proteins can be used. Examples of the plant protein include proteins derived from legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

Examples of the animal protein include egg proteins containing ovalbumin, casein, whey, lactalbumin, milk proteins such as lactalbumin, proteins derived from blood such as plasma, serum albumin, and decolorized hemoglobin, proteins derived from meat, and proteins derived from fish and shellfish. In addition, proteins derived from microorganisms such as yeasts, molds and bacteria can be used. Even in a protein having poor solubility in water, a protein material that can be used in the present invention can be prepared by the treatment described below.

### (Denaturation and molecular weight adjustment treatment)

The protein material used in the present invention can be obtained by applying combination of "degradation/denaturation treatment" for degrading and/or denaturing a protein and "molecular weight distribution adjustment treatment" for adjusting molecular weight distribution of the protein. Examples of the "degradation/denaturation treatment" include pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combination of these. The order and number of operations of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is obtained by the "degradation/denaturation treatment, the "molecular weight distribution adjustment treatment" need not be performed.

When these treatments are combined and performed a plurality of times, all the treatments may be performed continuously from raw materials or may be performed at time intervals. For example, a commercially available product that has undergone a certain treatment may be used as a raw material to perform another treatment. As long as the above properties are satisfied, the specific protein material may be obtained by mixing a protein material that has undergone the molecular weight distribution adjustment treatment with a protein material that has not undergone the molecular weight distribution adjustment treatment. In this case, the ratio of the two (protein material that has undergone the treatment: protein material that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the protein material used in the present invention may be a protein material that has undergone the "degradation/denaturation and molecular weight distribution adjustment treatments".

The conditions of the treatment for degrading or denaturing a protein, for example, types and concentrations of an enzyme, pH, an organic solvent, a mineral, and the like, a temperature, a pressure, an output intensity, an electric current, and time, can be appropriately set by those skilled in the art. In the case where an enzyme is used, examples of the used enzyme include proteases that are classified into "metal proteases", "acidic proteases", "thiol proteases", and "serine proteases". The reaction can be carried out at a reaction temperature of from 20 to 80°C and preferably of from 40 to 60°C. In the case of pH adjustment treatment, the treatment can be performed in a pH range including any values of pH 2, 2.5, 3, 3.5, 4, 4.5, 5, 5.5, 6, 6.5, 7, 7.5, 8, 8.5, 9, 9.5, 10, 10.5, 11, 11.5, and 12 as the upper limit and the lower limit, for example, in a range of pH from 2 to 12. In the case of acid treatment, the method may be a method of adding an acid or a method of performing fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid, such as fruit juice of lemon or the like, concentrated fruit juice, fermented milk, yogurt, or brewed vinegar. In the case of alkali treatment, an alkali, such as sodium hydroxide or potassium hydroxide, can be added. In the case of denaturant treatment, a denaturant, such as guanidine hydrochloride, urea, arginine, or PEG, may be added. In the case of heating or cooling treatment, examples of the heating temperature include ranges including any temperatures of 60°C, 70°C, 80°C, 90°C, 100°C, 110°C, 120°C, 125°C, 130°C, 135°C, 140°C, 145°C, and 150°C as the upper limit and the lower limit, for example, a range of from 60°C to 150°C. Examples of the cooling temperature include ranges including any temperatures of -10°C, -15°C, -20°C, -25°C, - 30°C, -35°C, -40°C, -45°C, -50°C, -55°C, -60°C, -65°C, -70°C, and -75°C as the upper limit and the lower limit, for example, a range of from -10°C to -75°C. Examples of the heating or cooling time include ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes as the upper limit and the lower limit, for example, a range of from 5 seconds to 200 minutes. In the case of high-pressure treatment, examples of the condition of the pressure include ranges including any pressures of 100 MPa, 200 MPa, 300 MPa, 400 MPa, 500 MPa, 600 MPa, 700 MPa, 800 MPa, 900 MPa, and 1000 MPa as the upper limit and the lower limit, for example, a range of from 100 MPa to 1000 MPa. In the case of organic solvent treatment, examples of the solvent to be used include alcohols and ketones, for example, ethanol and acetone. In the case of mineral addition treatment, examples of the mineral to be used include divalent metal ions, such as calcium and magnesium. In the case of supercritical treatment, the treatment can be performed, for example, using carbon dioxide in a supercritical state at a temperature of about 30°C or higher and a pressure of about 7 MPa or more. In the case of the ultrasonic treatment, the treatment can be performed, for example, by irradiation at a frequency of from 100 KHz to 2 MHz with an output of from 100 to 1000 W. In the case of the electrolysis treatment, for example, an aqueous protein solution may be treated by application of a voltage of from 100 mV to 1000 mV. In a specific embodiment, the treatment for decomposing and/or denaturing a protein is selected from the denaturant treatment, the heating treatment, and combinations thereof.

The conditions of the treatment for adjusting molecular weight distribution of a protein, for example, a type of filter medium, a carrier for gel filtration, the centrifugal rotation speed, an electric current, and time, can be appropriately set by those skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

The raw material of the present invention is evaluated by the following procedures.

### <Water content>

The water content is determined by an ordinary pressure heating loss method (105°C 12 hours).

### <Crude protein content>

The crude protein content is measured by the Kjeldahl method. Specifically, the mass of nitrogen measured by the Kjeldahl method relative to the weight of a protein material is represented by "mass%" as a crude protein content of the dried product. The nitrogen conversion coefficient is 6.25. Basically, the value is obtained by rounding the value to the first decimal place.

### <TCA solubilization rate>

To a 2 mass% aqueous solution of a protein material, 0.44 M trichloroacetic acid (TCA) is added in an equal amount to prepare a 0.22 M TCA solution, and a TCA solubilization rate is a value obtained by measuring the ratio of soluble nitrogen by the Kjeldahl method. Basically, the value is obtained by rounding the value to the first decimal place.

### <Viscosity (viscosity after heating)>

The viscosity of the protein material is measured using a B-type viscometer (Type BM available from TOKISANGYO). An aqueous protein material solution is prepared so as to have a crude protein content of 20 mass%, and charged in a measurement container, a rotor is set, and the container is sealed, and then heated at 80°C for 30 minutes in a hot water bath. Next, the viscosity is measured at an arbitrary rotation speed at 25°C, the pointer value is read, and the viscosity is calculated by multiplying a rotor No. and a conversion multiplier corresponding to the rotation speed. (Unit: Pa·s) The measured value after 1 minute is used. Basically, the rotation speed is set to 60 rpm. For a sample having a high viscosity, the rotor No. is changed from 1 to 4, and the rotation speed is decreased to 6 rpm. A measurement upper limit viscosity in this measurement is 100000 mPa·s. When the rotor No. 4 and the rotation speed of 6 rpm exceed the measurement range, the viscosity after heating is immediately determined to be 100000 mPa·s or more.

### <NSI>

60 ml of water is added to 3 g of a sample, followed by propeller stirring at 37°C for 1 hour and centrifugation at 1400 × g for 10 minutes to collect a supernatant (I). Next, 100 ml of water is again added to the remaining precipitate, and the mixture is again stirred with a propeller at 37°C for 1 hour and then centrifuged to collect a supernatant (II). The supernatants (I) and (II) are combined, and water is added to the mixed liquid to make it 250 ml. After the mixed liquid is filtered with filter paper (No. 5), a nitrogen content of the filtrate is measured by the Kjeldahl method. At the same time, the nitrogen amount in the sample is measured by the Kjeldahl method, and the proportion of the amount of nitrogen recovered as the filtrate (water-soluble nitrogen) to the total amount of nitrogen in the sample is expressed in mass% and is defined as the NSI. Basically, the value is obtained by rounding the value to the first decimal place.

The oil and/or fat composition of the present invention preferably contains 10 ppm or more of the protein material used in the present invention in the oil and/or fat composition, more preferably 15 ppm or more, and still more preferably 20 ppm or more. When the content of the present protein material is less than 10 ppm in the oil and/or fat composition, the effect of reducing the oily feeling may not be sufficiently obtained.

Similarly, the oil and/or fat composition of the present invention preferably contains 30000 ppm or less of the protein material used in the present invention in the oil and/or fat composition, more preferably 25000 ppm or less, still more preferably 20000 ppm or less, and most preferably 15000 ppm or less. When the content of the present protein material is more than 30000 ppm in the oil and/or fat composition, an unpleasant taste derived from the present protein material may occur.

In a method for producing an oil and/or fat composition according to the present invention, the effect of the protein material used in the present invention is not sufficiently exhibited in a state where the protein material in a solid or powder state is simply dispersed in the oil and/or fat composition. Thus, the protein material is preferably dispersed in a state of an aqueous solution in the oil and/or fat composition as described below.

The aqueous phase is prepared by dissolving the present protein material and optional glycerin in water. The oil phase is prepared from the oil and/or fat described above, or using all or a part of the oil and/or fat as a raw material. In the oil phase, an emulsifier or the like is dissolved as necessary.

Next, the obtained aqueous phase is dispersed in the oil phase to obtain a water-in-oil emulsion oil and/or fat composition. Various methods can be used for dispersion. Specifically, a high-pressure homogenizer, an ultrasonic emulsifier, and a two-liquid collision type emulsifying apparatus called a wet jet mill can be used. By using an appropriate emulsifying apparatus, a predetermined oil and/or fat composition can be obtained. When a high-pressure homogenizer is used, general emulsification conditions are from 5 to 40 MPa and from 1 to 30 passes. Thus, the particle size of the aqueous phase in the oil phase can be from 50 to 2000 nm.

As a mechanism by which an oily feeling reducing effect can be obtained in the oil and/or fat processed food by the oil and/or fat composition of the present invention, although it is a speculation, it is considered that the aqueous solution containing the protein material used in the present invention is dispersed in the oil and/or fat composition, leading to manifestation of a phase inversion effect in an emulsified state in an oral cavity, resulting in the reduced oily feeling. This presumption can also be supported by the result that the effect is not sufficiently exhibited in the state where a material in the solid or powder state is simply dispersed in the oil and/or fat composition, and a more sufficient effect is obtained in the state in which the material is dispersed in the aqueous solution state in the oil and/or fat composition.

The concentration of the aqueous solution containing the protein material used in the present invention, which is used in the method for producing an oil and/or fat composition according to the present invention, is preferably from 1 to 60 wt.%, more preferably from 3 to 50 wt.%, still more preferably from 5 to 40 wt.%, and most preferably from 10 to 30 wt.%. When the concentration of the aqueous solution containing the protein material is less than 1 wt.%, the amount of the protein material is small, and a sufficient oily feeling reducing effect derived from the present protein material may not be obtained. On the other hand, when the concentration of the aqueous solution containing the present protein material exceeds 60 wt.%, the concentration exceeds a saturated solubility of the aqueous solution, and suitable physical properties may not be obtained.

In a specific aspect of the present invention, the water activity of the oil and/or fat composition can be suppressed to be low. The water activity is an index for determining an amount of water that can be used by microorganisms as the amount of water in food increases. In particular, in food having a long storage period, suppressing the water activity to be low increases industrial utility value.

The water activity of the oil and/or fat composition in a specific aspect of the present invention is preferably 0.65 or less, more preferably 0.60 or less, still more preferably 0.55 or less, and most preferably 0.50 or less.

In a specific aspect of the present invention, as a method for suppressing the water activity of the oil and/or fat composition to 0.65 or less, it is preferable to add glycerin to the aqueous phase of the oil and/or fat composition. Specifically, a blending amount of glycerin in the oil and/or fat composition is more preferably 0.01 mass% or more, still more preferably 0.05 mass% or more, 0.08 mass% or more, and most preferably 0.11 mass% or more. When the blending amount of glycerin in the oil and/or fat composition is less than 0.01 mass%, the amount of water required instead of glycerin increases, so that the water activity may not be sufficiently reduced.

The oil and/or fat processed food obtained using the oil and/or fat composition of the present invention preferably contains 2 ppm or more of the present protein material in the oil and/or fat processed food, more preferably 3 ppm or more, and still more preferably 4 ppm or more. When the content of the present protein material is less than 2 ppm in the oil and/or fat processed food, the effect of reducing the oily feeling may not be sufficiently obtained.

Similarly, the oil and/or fat processed food according to the present invention preferably contains 6000 ppm or less of the present protein material in the oil and/or fat processed food, more preferably 5000 ppm or less, still more preferably 4000 ppm or less, and most preferably 3000 ppm or less. When the content of the present protein material is more than 6000 ppm in the oil and/or fat processed food, an unpleasant taste derived from the protein material may occur.

The application of the oil and/or fat composition of the present invention is not limited to specific food, and the oil and/or fat composition can be used for various oil and/or fat processed foods such as chocolate, cream, margarine, frying, and spray. In an oil and/or fat processed food which is required to have a reduced oily feeling, an undesirable flavor can be reduced by using this oil and/or fat composition.

Among them, in applications where an oily feeling is easily felt, the effect of reducing the oily feeling is manifested, and thus, the oil and/or fat composition is particularly suitable. Specific examples thereof include oil and/or fat processed foods having a relatively high oil content (for example, the oil content is 30 mass% or more, or the oil content is 35 mass% or more) and oil and/or fat processed foods containing a milk solid content.

Examples of the food having a relatively high oil content include chocolates. The chocolates are not particularly limited as long as they are foods having oil and/or fat as a continuous phase and produced by a process for producing chocolates known in the art. In general, this technique can be applied to those having an oil content of from 30 to 70 mass% such as coated chocolate. In addition, this technique can also be applied to ganache which is an emulsion using chocolates having an oil content of from 30 to 70 mass%. Even in the case of chocolates having the same oil content, the effect can be more pronounced in white chocolate and milk chocolate than in black chocolate and sweet chocolate. In addition, chocolate can be mixed with all other raw materials in a melted state, or can be added as additional oil after conching.

When the oil and/or fat processed food is an emulsion, an emulsion type thereof is not particularly limited, and examples thereof include a water-in-oil type, or a composition in an emulsified state including a partially unstable state, and a confectionery using the composition.

The oil and/or fat composition according to an embodiment of the present invention can also be regarded as an oily feeling reducing agent. Specifically, when an oil and/or fat processed food uses the oil and/or fat composition containing the protein material which has properties in which after an aqueous solution having a crude protein mass of 20 mass% is heated at 80°C for 30 minutes, the aqueous solution has a viscosity of 10000 mPa·s or less measured at 25°C and a 0.22 M TCA solubilization rate is from 30 to 95%, the oil and/or fat processed food having a reduced oily feeling can be obtained.

The present invention can also be regarded as a method for reducing the oily feeling of the oil and/or fat processed food. Specifically, when an oil and/or fat processed food uses the oil and/or fat composition containing the protein material which has properties in which after an aqueous solution having a crude protein mass of 20 mass% is heated at 80°C for 30 minutes, the aqueous solution has a viscosity of 10000 mPa·s or less measured at 25°C and a 0.22 M TCA solubilization rate is from 30 to 95%, the oil and/or fat processed food having a reduced oily feeling can be obtained.

### Examples

Next, the present invention will be described in more detail with reference to Examples, but is not limited to only such Examples. In the following description, "parts" and "%" are "parts by mass" and "mass%", respectively, unless otherwise specified.

Oil and/or fat compositions of Examples 1 to 18 and oil and/or fat compositions of Comparative Examples 1 to 4 were prepared according to the formulations of Tables 1 to 4 using the "raw materials of the oil and/or fat composition". A method for preparing the oil and/or fat composition was according to "Method for preparing oil and/or fat composition". The water activity (Aw) of the oil and/or fat composition was measured at 25°C using a water activity measuring device AquaLab TDL available from METER Group, Inc. JAPAN.

### (Raw material of oil and/or fat composition)

· As palm fractionated compound oil, mixture of equal amounts of palm olein (iodine value: 56) available from Fuji Oil Co., Ltd. and a palm fractionated medium-melting part (iodine value: 45) available from Fuji Oil Co., Ltd. was used.
· Polyglycerin condensed ricinoleic acid ester (PGPR) "SY Glyster-CR-350 H" available from Taiyo Kagaku Co., Ltd. was used as an emulsifier.
· Glycerin (food additive grade) available from Kishida Chemical Co., Ltd. was used as the glycerin.
· As a soybean protein material A, a test product (moisture: 1.2%, crude protein content: 79.3%, TCA solubilization rate: 61.8%, viscosity after heating: 28 mPa·s, NSI: 98.1) available from Fuji Oil Co., Ltd., which was subjected to degradation/denaturation and molecular weight distribution adjustment treatments, was used, using "FUJIPRO R" (crude protein content: 87.2%, TCA solubilization rate: 3.2%) available from Fuji Oil Co., Ltd. as a raw material.
· As a soybean protein material B, "FUJIPRO R" (crude protein content: 87.2%, TCA solubilization rate: 3.2%, viscosity after heating: 100000 mPa·s or more, NSI 81.2) available from Fuji Oil Co., Ltd. was used.
· As a soybean protein material C, "FUJIPRO CL" (crude protein content: 88.0%, TCA solubilization rate: 23.0%, viscosity after heating: 100000 mPa·s or more, NSI 65.0) available from Fuji Oil Co., Ltd. was used.
· As a soybean protein material D, "HINUTE AM" (crude protein content: 90.0%, TCA solubilization rate: 100.0%, viscosity after heating: 20 mPa·s, NSI 100) available from Fuji Oil Co., Ltd. was used.

**(Table 1)**

| | | Oil and/or fat composition Example 1 | Oil and/or fat composition Example 2 | Oil and/or fat composition Example 3 | Oil and/or fat composition Example 4 | Oil and/or fat composition Example 5 | Oil and/or fat composition Example 6 |
|---|---|---|---|---|---|---|---|
| Oil phase [mass%] | Palm fractionated compound oil | 99.987 | 99.933 | 99.800 | 99.791 | 99.734 | 99.734 |
| | Emulsifier | 0.003 | 0.017 | 0.050 | 0.030 | 0.036 | 0.036 |
| Aqueous phase [mass%] | Water | 0.008 | 0.040 | 0.120 | 0.143 | 0.053 | 0.035 |
| | Glycerin | 0.000 | 0.000 | 0.000 | 0.000 | 0.141 | 0.159 |
| | Soybean protein material A | 0.002 | 0.010 | 0.030 | 0.036 | 0.036 | 0.036 |
| Total [mass%] | | 100.000 | 100.000 | 100.000 | 100.000 | 100.000 | 100.000 |
| Content of soybean protein material A [ppm] | | 20 | 100 | 300 | 360 | 360 | 360 |
| Concentration of protein material in aqueous phase [wt.%] | | 20 | 20 | 20 | 20 | 16 | 16 |
| Water activity [Aw] | | 0.28 | 0.45 | 0.64 | 0.67 | 0.25 | 0.22 |

**(Table 2)**

| | | Oil and/or fat composition Example 7 | Oil and/or fat composition Example 8 | Oil and/or fat composition Example 9 | Oil and/or fat composition Example 10 | Oil and/or fat composition Example 11 | Oil and/or fat composition Example 12 |
|---|---|---|---|---|---|---|---|
| Oil phase [mass%] | Palm fractionated compound oil | 99.60 | 99.55 | 99.55 | 99.29 | 99.25 | 99.20 |
| | Emulsifier | 0.10 | 0.06 | 0.06 | 0.18 | 0.19 | 0.20 |
| Aqueous phase [mass%] | Water | 0.24 | 0.09 | 0.06 | 0.42 | 0.45 | 0.48 |
| | Glycerin | 0.00 | 0.24 | 0.27 | 0.00 | 0.00 | 0.00 |
| | Soybean protein material A | 0.06 | 0.06 | 0.06 | 0.11 | 0.11 | 0.12 |
| Total [mass%] | | 100.00 | 100.00 | 100.00 | 100.00 | 100.00 | 100.00 |
| Content of soybean protein material A [ppm] | | 600 | 600 | 600 | 1050 | 1125 | 1200 |
| Concentration of protein material in aqueous phase [wt.%] | | 20 | 15 | 15 | 20 | 20 | 20 |
| Water activity [Aw] | | 0.74 | 0.28 | 0.23 | 0.79 | 0.80 | 0.81 |

**(Table 3)**

| | | Oil and/or fat composition Example 13 | Oil and/or fat composition Example 14 | Oil and/or fat composition Example 15 | Oil and/or fat composition Example 16 | Oil and/or fat composition Example 17 | Oil and/or fat composition Example 18 |
|---|---|---|---|---|---|---|---|
| Oil phase [mass%] | Palm fractionated compound oil | 99.11 | 99.11 | 99.09 | 98.20 | 93.00 | 91.00 |
| | Emulsifier | 0.12 | 0.12 | 0.23 | 0.45 | 1.00 | 1.30 |
| Aqueous phase [mass%] | Water | 0.18 | 0.12 | 0.54 | 1.08 | 4.80 | 1.80 |
| | Glycerin | 0.47 | 0.53 | 0.00 | 0.00 | 0.00 | 4.70 |
| | Soybean protein material A | 0.12 | 0.12 | 0.14 | 0.27 | 1.20 | 1.20 |
| Total [mass%] | | 100.00 | 100.00 | 100.00 | 100.00 | 100.00 | 100.00 |
| Content of soybean protein material A [ppm] | | 1200 | 1200 | 1350 | 2700 | 12000 | 12000 |
| Concentration of protein material in aqueous phase [wt.%] | | 16 | 16 | 20 | 20 | 20 | 16 |
| Water activity [Aw] | | 0.29 | 0.27 | 0.81 | 0.84 | 0.91 | 0.48 |

**(Table 4)**

| | | Oil and/or fat composition Comparative Example 1 | Oil and/or fat composition Comparative Example 2 | Oil and/or fat composition Comparative Example 3 | Oil and/or fat composition Comparative Example 4 |
|---|---|---|---|---|---|
| Oil phase [mass%] | Palm fractionated compound oil | 100.00 | 98.89 | 98.44 | 99.16 |
| | Emulsifier | 0.00 | 0.25 | 0.36 | 0.18 |
| Aqueous phase [mass%] | Water | 0.00 | 0.74 | 1.08 | 0.54 |
| | Glycerin | 0.00 | 0.00 | 0.00 | 0.00 |
| | Soybean protein material A | 0.00 | 0.00 | 0.00 | 0.00 |
| | Soybean protein material B | 0.00 | 0.12 | 0.00 | 0.00 |
| | Soybean protein material C | 0.00 | 0.00 | 0.12 | 0.00 |
| | Soybean protein material D | 0.00 | 0.00 | 0.00 | 0.12 |
| Total [mass%] | | 100.00 | 100.00 | 100.00 | 100.00 |
| Content of soybean protein material A [ppm] | | 0 | 0 | 0 | 0 |
| Content of soybean protein material B [ppm] | | 0 | 1200 | 0 | 0 |
| Content of soybean protein material C [ppm] | | 0 | 0 | 1200 | 0 |
| Content of soybean protein material D [ppm] | | 0 | 0 | 0 | 1200 |
| Concentration of protein material in aqueous phase [wt.%] | | - | 14 | 10 | 18 |
| Water activity [Aw] | | 0.22 | 0.82 | 0.84 | 0.80 |

### (Method for preparing oil and/or fat composition)

1 Raw materials classified into an aqueous phase and an oil phase were each mixed to prepare the aqueous phase and the oil phase.
2 The aqueous phase was gradually added to a portion where the oil phase was stirred to form a substantially emulsion.
3 An oil and/or fat composition which was a water-in-oil emulsion oil and/or fat composition was obtained by a high-pressure homogenizer. Conditions of the high-pressure homogenizer were 10 MPa and 5 passes.

### (Preparation of chocolate)

Oil and/or fat processed food Example 1 was prepared as a chocolate dough according to a known method using 35.4 parts of sugar, 17.8 parts of whole milk powder, 15.2 parts of cocoa butter, 11.6 parts of cocoa mass, 20.0 parts of Oil and/or fat composition Example 1, 0.4 parts of lecithin. and 0.024 parts of vanillin. In the blended raw materials, the whole milk powder contained 26 mass% of milk fat, and the cocoa mass contained 55 mass% of cocoa butter; therefore, the oil content of the oil and/or fat processed food (chocolate) was 46.2 mass%. In the oil content, the contents of cocoa butter, milk fat, and vegetable oil and/or fat were 21.6 mass%, 4.6 mass%, and 20.0 mass%, respectively.

Oil and/or fat composition Examples 2 to 18 and Oil and/or fat composition Comparative Examples 1 to 4 were used to prepare Oil and/or fat processed food Examples 2 to 18 and Oil and/or fat processed food Comparative Examples 1 to 4 in the same manner.

The prototype chocolate was completely dissolved and then cooled, 0.2 parts by mass of a StOSt-containing chocolate seed agent was added to 100 parts by mass of the chocolate at 28°C, seed tempering was performed, then the mixture was poured into a mold and cooled at 10°C for 60 minutes, and the chocolate was separated from the mold, and then stored at 20°C for 7 days.

The oily feeling of chocolate was evaluated by consultation of five skilled panelists according to the "Evaluation criteria of oily feeling".

Tables 5 to 8 indicate results of the evaluation.

### (Evaluation criteria for oily feeling)

3 or more points were determined to be acceptable.
· 5 points: The oily feeling is felt weak.
· 4 points: The oily feeling is felt slightly weak.
· 3 points: The oily feeling is felt slightly strongly.
· 2 points: The oily feeling is felt slightly strong.
· 1 point: The oily feeling is felt very strongly.

**(Table 5)**

| | Oil and/or fat processed food Example 1 | Oil and/or fat processed food Example 2 | Oil and/or fat processed food Example 3 | Oil and/or fat processed food Example 4 | Oil and/or fat processed food Example 5 | Oil and/or fat processed food Example 6 |
|---|---|---|---|---|---|---|
| (Reference) water activity [Aw] in oil and/or fat composition | 0.28 | 0.45 | 0.64 | 0.67 | 0.25 | 0.22 |
| Content of soybean protein material A [ppm] | 4 | 20 | 60 | 72 | 72 | 72 |
| Evaluation of oily feeling | 3 | 4 | 5 | 5 | 5 | 5 |

**(Table 6)**

| | Oil and/or fat processed food Example 7 | Oil and/or fat processed food Example 8 | Oil and/or fat processed food Example 9 | Oil and/or fat processed food Example 10 | Oil and/or fat processed food Example 11 | Oil and/or fat processed food Example 12 |
|---|---|---|---|---|---|---|
| (Reference) water activity [Aw] in oil and/or fat composition | 0.74 | 0.28 | 0.23 | 0.79 | 0.80 | 0.81 |
| Content of soybean protein material A [ppm] | 120 | 120 | 120 | 210 | 225 | 240 |
| Evaluation of oily feeling | 5 | 5 | 5 | 5 | 5 | 5 |

**(Table 7)**

| | Oil and/or fat processed food Example 13 | Oil and/or fat processed food Example 14 | Oil and/or fat processed food Example 15 | Oil and/or fat processed food Example 16 | Oil and/or fat processed food Example 17 | Oil and/or fat processed food Example 18 |
|---|---|---|---|---|---|---|
| (Reference) water activity [Aw] in oil and/or fat composition | 0.29 | 0.27 | 0.81 | 0.84 | 0.91 | 0.48 |
| Content of soybean protein material A [ppm] | 240 | 240 | 270 | 540 | 2400 | 2400 |
| Evaluation of oily feeling | 5 | 5 | 5 | 5 | 5 | 5 |

**(Table 8)**

| | Oil and/or fat processed food Comparative Example 1 | Oil and/or fat processed food Comparative Example 2 | Oil and/or fat processed food Comparative Example 3 | Oil and/or fat processed food Comparative Example 4 |
|---|---|---|---|---|
| (Reference) water activity [Aw] in oil and/or fat composition | 0.22 | 0.82 | 0.84 | 0.80 |
| Content of soybean protein material A [ppm] | 0 | 0 | 0 | 0 |
| Content of soybean protein material B [ppm] | 0 | 240 | 0 | 0 |
| Content of soybean protein material C [ppm] | 0 | 0 | 240 | 0 |
| Content of soybean protein material D [ppm] | 0 | 0 | 0 | 240 |
| Evaluation of oily feeling | 1 | 1 | 1 | 1 |

### (Consideration on evaluation of oily feeling)

· In all of the Oil and/or fat processed foods 1 to 18 prepared with the Oil and/or fat composition Examples 1 to 18, the oily feeling was evaluated to be higher than or equal to the acceptance criteria. Regarding the soybean protein material A, an improvement in the effect of reducing the oily feeling was observed depending on the content in the oil and/or fat processed food.
· In the Oil and/or fat composition Examples 5 and 6 in which the oil and/or fat compositions were prepared using glycerin, the water activity was reduced compared to the Oil and/or fat composition Example 4. Thus the Oil and/or fat composition Examples 5 and 6 corresponded to a specific aspect of the present invention because . On the other hand, the results of the oily feeling evaluation of the Oil and/or fat processed food Examples 4 to 6 were equivalent, and it was confirmed that the function of reducing the oily feeling was not impaired by changing the method of preparing the oil and/or fat composition. In addition, in the comparison of the Oil and/or fat composition Examples 7 to 9 and 12 to 14 with each other, the same observation could be made, and thus it was shown that the same effect could be obtained without being limited to a specific content of the soybean protein material A.
· From the observation of the Oil and/or fat composition Comparative Examples 1 to 4, it was shown that when the soybean protein material was not included, or when the soybean protein material other than the soybean protein material A was used, a sufficient oily feeling reducing effect was not observed.

### Industrial Applicability

According to the present invention, an oil and/or fat composition suitable for producing an oil and/or fat processed food having a reduced oily feeling can be obtained by a simple method.

## Claims

1. An oil and/or fat composition comprising a protein material wherein the protein material has properties in which after an aqueous solution having a crude protein content of 20 mass% is heated at 80°C for 30 minutes, the aqueous solution has a viscosity of 10000 mPa·s or less measured at 25°C, and a 0.22 M TCA solubilization rate of is from 30% to 95%.

2. The oil and/or fat composition according to claim 1, wherein the protein material has an NSI of 80 or more.

3. The oil and/or fat composition according to claim 1, wherein a water activity is 0.65 or less.

4. An oil and/or fat processed food comprising the oil and/or fat composition described in claim 1.

5. The oil and/or fat processed food according to claim 4, wherein the oil and/or fat processed food is a chocolate.

6. A method for producing the oil and/or fat composition described in claim 1, the method comprising dispersing an aqueous solution of a protein material in an oil and/or fat raw material.

7. The oil and/or fat composition according to claim 1, wherein the oil and/or fat composition is an oily feeling reducing agent.

8. A method for reducing an oily feeling of an oil and/or fat processed food, wherein the oil and/or fat processed food includes the oil and/or fat composition described in claim 1.
